# FASCICULE DE BREVET EUROPEEN

(11) **EP 1 613 495 B1**
(45) Date de publication et mention de la délivrance du brevet: **09.07.2008**
(21) Numéro de dépôt: 04742500.4
(22) Date de dépôt: 14.04.2004
(51) Int. Cl.: B60J 7/14, B60J 7/20, B60R 5/04

(54) **SYSTEME DE PLAGE ARRIERE ESCAMOTABLE POUR VEHICULE DECOUVRABLE A TOIT REPLIABLE**
ABLAGESYSTEM FÜR EIN CABRIOFAHRZEUG MIT FALTVERDECK
RETRACTABLE PARCEL SHELF SYSTEM FOR A CONVERTIBLE VEHICLE WITH A FOLDING ROOF

(30) Priorité: 15.04.2003 FR 0304724
(43) Date de publication de la demande: 11.01.2006
(73) Titulaire: Heuliez, 79142 Cerizay (FR)
(72) Inventeur: QUEVEAU, Gérard, F-79140 Le Pin (FR); QUEVEAU, Paul, F-79140 Montravers (FR); SINEGRE, Alain, F-91160 Ballainvilliers (FR)
(74) Mandataire: Pichat, Thierry
(86) Numéro de dépôt international: PCT/FR2004/000917
(87) Numéro de publication internationale: WO 2004/091953

(56) Documents cités:
- DE-A- 10 143 365
- DE-A- 19 723 818
- FR-A- 2 802 477
- FR-A- 2 805 218
- US-A- 5 921 608
- US-A1- 2002 149 227
- US-B1- 6 254 165

## Description

L'invention concerne un système de plage arrière escamotable pour véhicule découvrable à toit repliable.

Un tel système de toit arrière escamotable est connu en lui-même et comprend au moins une tablette et des moyens pour faire pivoter cette tablette autour d'un axe transversal par rapport à l'axe longitudinal (direction d'avance) du véhicule. Ainsi, la tablette tourne entre une position normale d'utilisation (typiquement une position horizontale) et une position rangée ou escamotée à l'intérieur d'un espace de rangement du véhicule qui permet typiquement d'y replier également le toit repliable.

Traditionnellement, l'espace de rangement est constitué par le coffre arrière du véhicule qui reçoit typiquement à la fois la tablette escamotée et le toit replié.

Lorsque le système de plage arrière comporte une tablette monobloc s'étendant sur toute la dimension transversale de l'habitacle du véhicule, la dimension de cette tablette peut créer des difficultés si l'on veut placer la tablette dans sa position escamotée à l'intérieur de l'espace de rangement, dans un volume de dimension transversale limitée situé entre les roues.

En particulier pour cette raison, on connaît déjà des systèmes de plage arrière comprenant une tablette centrale et des (typiquement deux) tablettes latérales disposées de part et d'autre de la tablette centrale et mobiles par rapport à celle-ci. Des moyens de déplacement sont en outre prévus pour déplacer les tablettes latérales par rapport à la tablette centrale, lorsque l'on fait pivoter la tablette centrale dans un sens ou dans l'autre.

De façon plus précise, la demande de brevet français FR 02 05568 déposée le 3 mai 2002 au nom de la demanderesse, décrit un système de plage arrière escamotable comportant deux tablettes latérales montées de façon pivotante autour d'un axe sensiblement perpendiculaire à la surface supérieure de la tablette centrale et agencées de manière telle que chaque tablette latérale, en position pivotée, est rangée sensiblement sous la tablette centrale, qui est elle-même dans sa position escamotée. Ce système comporte des moyens pour commander le pivotement de chaque tablette latérale vers l'intérieur par rapport à la tablette centrale pendant le mouvement de pivotement de la tablette centrale de sa position normale vers sa position escamotée. Chaque tablette latérale est commandée par le mouvement de la tablette centrale par un jeu de biellettes qui prennent appui sur des surfaces correspondantes de la carrosserie du véhicule ou en des points d'appui solidaires de la tablette centrale. Dans la position normale, sensiblement horizontale, de la tablette centrale, les tablettes latérales sont maintenues dans leur position déployée par des ressorts, quelle que soit la position, rangée et repliée ou déployée et fermée, du toit.

Dans de nombreux cas, le toit rigide repliable comporte de chaque côté du véhicule, quel que soit le type de toit repliable, au moins un bras dont l'extrémité inférieure est montée de manière pivotante sur la carrosserie du véhicule autour d'un axe transversal par rapport au dit véhicule.

Un système de plage arrière ayant les caractéristiques du préambule de la revendication 1 est décrit dans le document US-A-2002/0149227.

Lorsque le toit est replié pour passer de sa position fermée, sur l'habitacle du véhicule, à sa position rangée dans le coffre arrière du véhicule, chaque bras pivotant passe d'une position sensiblement verticale à une position sensiblement horizontale, ce qui libère à chaque extrémité latérale de la tablette centrale une ouverture qui doit être obturée par la tablette latérale correspondante. Il en est de même pour la custode (ou élément latéral de la partie de toit arrière) correspondante munie de ses garnitures intérieures. Cette custode, qui a une certaine épaisseur et dont les garnitures peuvent souvent cacher les bras pivotants précités, ou qui peut faire office de bras pivotant, libère, quand elle est rangée dans le coffre arrière avec les autres parties du toit, une ouverture qui doit être obturée.

Le but de l'invention est de proposer un système de plage arrière escamotable de structure simple, peu onéreuse et fiable, commandant le déploiement des tablettes latérales lorsque la tablette centrale passe de sa position escamotée à sa position normale alors que le toit est dans sa position rangée et repliée à l'intérieur du coffre arrière du véhicule, et le retrait des tablettes latérales lorsque la tablette centrale pivote dans le sens opposé.

La présente invention concerne ainsi un système de plage arrière escamotable à disposer sur un véhicule découvrable à toit rigide repliable dans un espace de rangement du véhicule, lequel véhicule présente un axe longitudinal et un avant et comprend un châssis et un habitacle, le système comprenant une tablette centrale et deux tablettes latérales disposées de part et d'autre de la tablette centrale, solidaires de celle-ci, et mobiles par rapport à celle-ci, ainsi que des moyens pour faire pivoter la tablette centrale autour d'au moins un axe transversal par rapport au dit axe longitudinal, entre une position normale d'utilisation et une position escamotée vers l'avant à l'intérieur de l'espace de rangement, permettant ainsi de ranger le toit repliable à l'intérieur de l'espace de rangement ou à l'inverse de sortir ce toit de sa position rangée vers une position fermée au dessus de l'habitacle, et des moyens pour déplacer les tablettes latérales par rapport à la tablette centrale.

Suivant l'invention, ce système est caractérisé en ce qu'il comprend des moyens de butée solidaires de la tablette centrale et mobiles avec celle-ci ou par rapport à celle-ci vers l'avant ou vers l'arrière, ces moyens étant agencés de manière telle que, lorsque la tablette centrale passe de sa position escamotée à sa position normale d'utilisation, ces moyens de butée sont adaptés à venir en butée contre une conformation complémentaire du toit dans sa position rangée pour commander le déploiement des tablettes latérales par rapport à la tablette centrale.

Les tablettes latérales sont donc ainsi déployées uniquement lorsque le toit est dans sa position rangée dans le coffre arrière du véhicule.

Suivant une version intéressante de l'invention, les moyens de butée sont sollicités en permanence vers l'arrière par des moyens de rappel élastique.

Suivant une autre version intéressante de l'invention, les moyens de butée sont ménagés à l'extrémité libre d'au moins un bras monté de manière pivotante autour d'un axe transversal par rapport à la carrosserie du véhicule, et peuvent être reliés par une bielle à des moyens d'actionnement de la tablette latérale correspondante.

Suivant une version avantageuse de l'invention, chaque tablette latérale est montée de manière pivotante autour d'un axe correspondant sensiblement perpendiculaire à la surface supérieur de la tablette centrale. Chaque bielle est reliée à la tablette latérale correspondante par une rotule disposée par rapport au dit axe d'une manière telle qu'un déplacement relatif vers l'avant de chaque bielle par rapport à la tablette centrale provoque un pivotement de la tablette latérale correspondante vers sa position déployée.

Par ailleurs, pour une commande mécaniquement efficace du système de plage arrière, il est également conseillé que la butée mobile soit liée à une barre s'étendant transversalement par rapport à l'axe longitudinal du véhicule et qui est fixe par rapport au châssis du véhicule, et la tablette centrale est montée pivotante par rapport à cette barre, par l'intermédiaire d'au moins une paire de bras articulés.

Le système comporte de préférence une butée liée à la barre précitée, pour la commande de chaque tablette latérale.

On sécurise ainsi le système. En outre, le système de plage arrière constitue ainsi un sous-ensemble qui est fixé à ladite barre et qui peut être monté comme tel, sur un véhicule, ce sous-ensemble étant fixé sur le véhicule par les moyens de fixation de ladite barre.

Selon une autre caractéristique de l'invention, il est avantageusement prévu qu'en position escamotée, la tablette centrale et les tablettes latérales soient basculées en position sensiblement verticale et, lors de ce basculement, la bielle agit sur le bras articulé concerné pour le placer en position sensiblement horizontale, pour le passage du toit.

Ainsi, on libère un passage approprié pour le passage du toit.

A noter également qu'avantageusement, en position normale d'utilisation de la tablette centrale (typiquement horizontale ou sensiblement horizontale), alors que le toit est fermé au dessus de l'habitacle du véhicule, la butée concernée est sollicitée vers l'arrière sous l'effet du système de rappel et maintient ainsi les tablettes latérales escamotées par rapport à la tablette centrale.

Comme déjà indiqué, on limite ainsi le nombre de mouvement des tablettes latérales et l'on favorise la rapidité des manoeuvres de repliement du toit (puisque les tablettes latérales sont déjà escamotées).

L'invention concerne également un véhicule découvrable à toit rigide repliable comprenant un système de plage arrière selon la première version de l'invention.

Une description encore plus détaillée de l'invention suit en référence au dessins annexés donnés à titre d'exemple non limitatif et dans lesquels :
- la figure 1 est une vue schématique partielle en élévation d'un véhicule découvrable à toit rigide repliable adapté à recevoir un système de plage arrière selon l'invention ;
- la figure 2 montre schématiquement le mécanisme de la tablette centrale et des tablettes latérales en vue de trois quart arrière selon un mode de réalisation du système de plage arrière selon l'invention ;
- la figure 3 montre en vue agrandie, locale, en perspective de trois quart de dessous à partir de l'avant, le mécanisme d'entraînement d'une des tablettes latérales du système de la figure 2 ;
- la figure 4 montre une partie du mécanisme des tablettes, lorsque le toit est rangé dans la malle (position cabriolet), suivant une coupe faite dans le plan vertical 4 de la figure 3,
- la figure 5 est une vue locale de côté (flèche V de la figure 3) du mécanisme de tablette lorsque le toit est fermé au-dessus de l'habitacle, et que les tablettes sont escamotées,
- la figure 6 montre une zone locale de la tablette centrale avec, dessous, l'une des tablettes latérales en position escamotée (vue suivant la flèche VI de la figure 5),
- la figure 7 montre , comme la figure 5, une vue de côté du mécanisme de tablettes lorsque les tablettes basculent pour permettre le passage du toit.

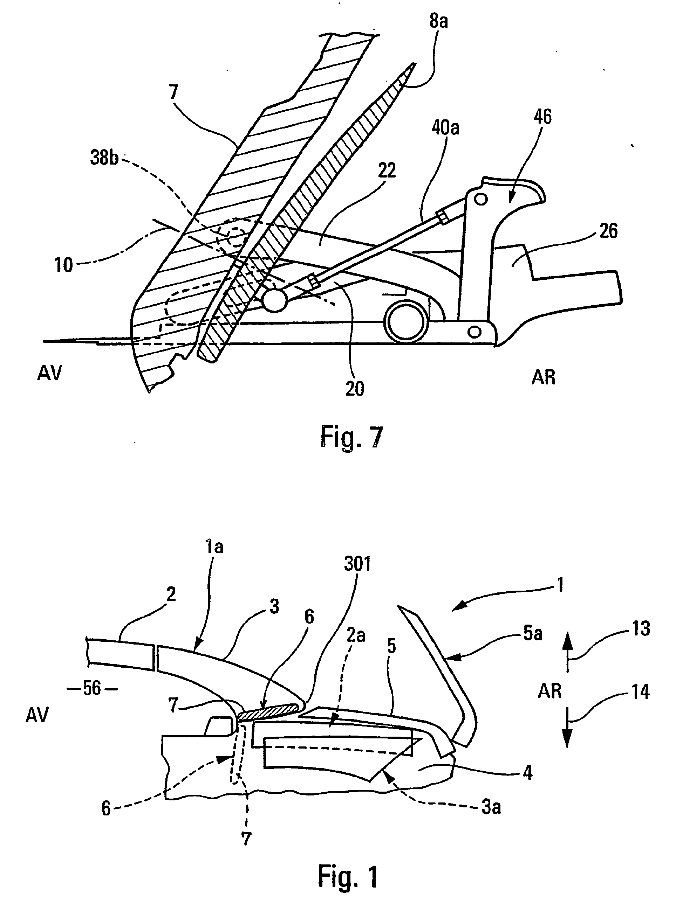

Sur la figure 1, le mode de réalisation montre un véhicule découvrable 1 à toit rigide repliable 1a comprenant une partie de toit avant 2 et une partie de toit arrière 3 qui sont mobiles par rapport au véhicule et l'une par rapport à l'autre pour pouvoir être repliées respectivement dans les positions 2a et 3a à l'intérieur du coffre arrière 4 dont le capot 5 peut s'ouvrir de l'avant vers l'arrière dans la position 5a pour permettre le passage des parties de toit. Plus de deux parties ou moins de deux parties peuvent être prévues, pour le toit 1a. Si, comme cela est normalement le cas, le toit 1a est en plusieurs parties, ces parties sont mobiles les uns vis à vis des autres pour s'articuler entre une position déployée (sensiblement alignées au-dessus de l'habitacle) et une position repliée, rangée dans le coffre arrière 4 dans un état superposé sur la figure 1 (la partie arrière 3a recevant au dessus d'elle la partie avant 2a, de sorte que les deux parties sont disposées sensiblement à l'horizontale, l'une au dessus de l'autre).

Ainsi, lorsqu'il est fermé au dessus de l'habitacle, (à gauche sur la figure 1), le toit la est étendu à l'horizontal, tandis qu'il est replié, dans le coffre, dans son état ouvert, rangé dans le coffre (à droite sur la figure 1 ; traits pointillés 2a et 3a).

Le véhicule 1 comporte un système de plage arrière 6 qui est représenté à la figure 1 en trait plein, dans sa position normale d'utilisation, en l'espèce sensiblement horizontale, et en tirets dans sa position escamotée, dans cet exemple une position sensiblement verticale à l'avant du coffre arrière.

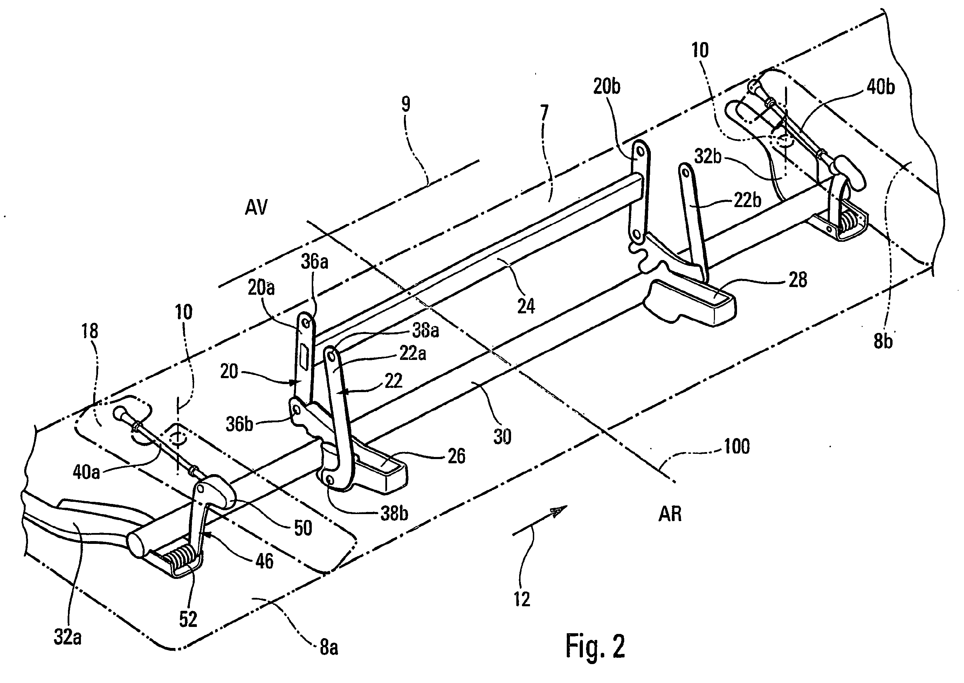

Comme on peut le voir schématiquement sur la figure 2, le système de plage arrière comprend une tablette centrale 7 et deux tablettes latérales 8a, 8b disposées de part et d'autre de la tablette centrale, dans la direction transversale 9 du véhicule qui est ici perpendiculaire à la direction longitudinale 100 (ou direction d'avance) de ce véhicule.

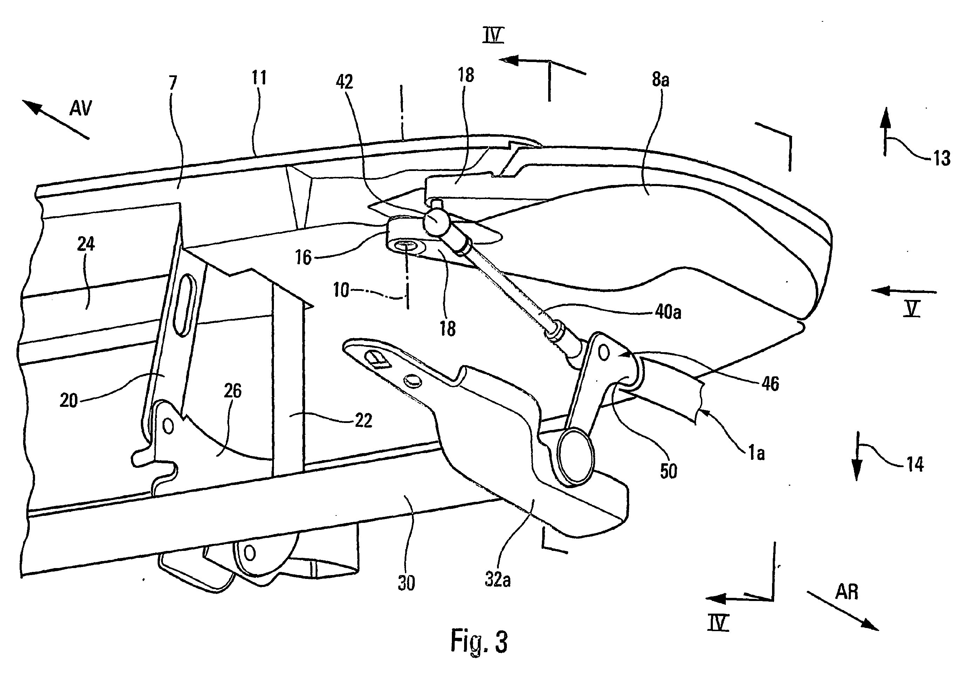

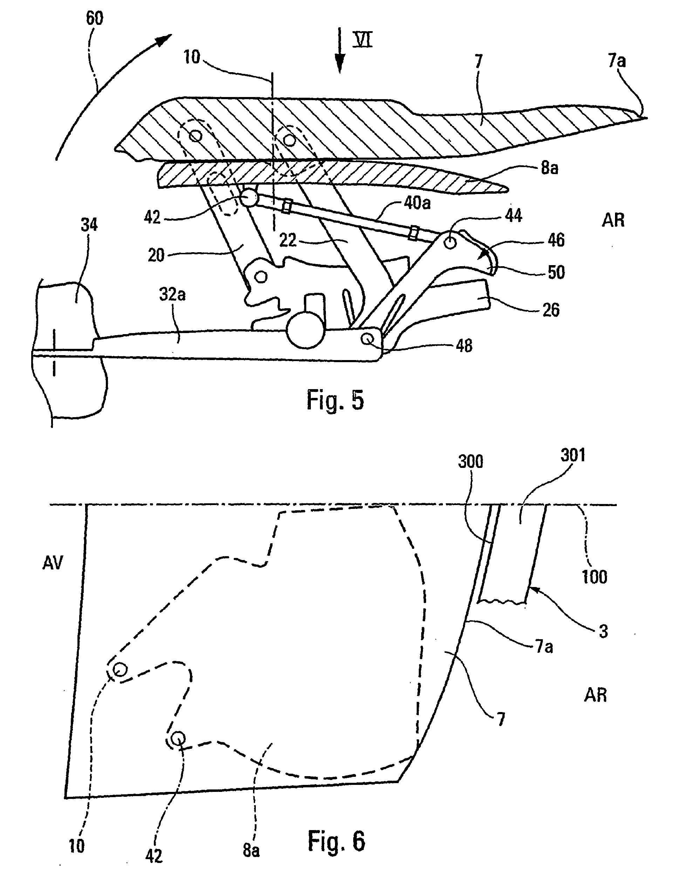

Les tablettes latérales 8a, 8b sont mobiles par rapport à la tablette centrale 7 pour occuper une position soit déployée par rapport à elle (figure 2 ou figure 3 pour la tablette 8a) soit escamotée (figure 6 ou 7 pour la même tablette latérale).

Le système de plage arrière 6 comporte des moyens pour faire pivoter la tablette centrale 7 dans les deux sens autour d'au moins un axe transversal (parallèle à la direction transversale 9), entre sa position normale sensiblement horizontale et une position escamotée, rangée à l'intérieur du coffre arrière 4 et permettant de replier les deux parties 2, 3 du toit repliable à l'intérieur de ce coffre.

Le système de plage arrière 6 comporte également des moyens pour déplacer les tablettes latérales 8a, 8b par rapport à la tablette centrale 7.

Même si d'autres systèmes pourraient être prévus pour un tel déplacement (système à basculement vertical des tablettes latérales autour d'axes latéraux parallèles à l'axe 100, ou système à glissières assurant un coulissement des tablettes latérales vis-à-vis de la tablette centrale, parallèlement à l'axe 9), il a été ici prévu que chaque tablette latérale soit montée pivotante autour d'un axe 10 (voir figure 3 pour la tablette 8a) sensiblement perpendiculaire à la surface supérieure 11 de la tablette centrale 7. L'axe 10 est agencé de manière telle que chaque tablette latérale 8a, 8b, en position escamotée, est pivotée sensiblement sous la tablette centrale 7.

Le système 6 comporte en outre des moyens pour commander le pivotement de chaque tablette latérale par rapport à la tablette centrale 7, en liaison avec le toit repliable.

Sur certaine des figures, les repères AV et AR définissent respectivement les côtés avant et arrière des zones concernées ou du véhicule lui-même (l'avant étant dirigé vers la direction d'avance du véhicule).La flèche 12 montre le sens vers l'intérieur du véhicule, en direction de l'axe longitudinal 100 par où passe le plan de symétrie longitudinal du véhicule, tandis que les flèches 13 et 14 schématisent respectivement (sur la figure 3 en particulier) les sens respectivement vers le haut et vers le bas.

Comme on peut le voir en particulier sur les figures 2 et 3, chaque tablette latérale présente, près de son coin intérieur avant 16, un prolongement 18 s'étendant transversalement vers l'intérieur (dans le sens de la flèche 12), ceci pour la tablette 8a sur la figure 3 (sous la tablette centrale 7).

Le prolongement 18 porte un organe de pivotement adapté à coopérer avec un organe de pivotement complémentaire coaxial fixé sous la tablette centrale. L'un quelconque de ces organes de pivotement peut être un organe mâle, l'autre étant un organe femelle annulaire adapté pour entourer l'organe mâle.

Comme on peut le voir sur différentes figures, la tablette centrale 7 est, par l'intermédiaire d'au moins une paire de bras 20, 22, articulée en basculement parallèlement à l'axe 9 entre une position normale d'utilisation, typiquement une position horizontale (voir figures 2 à 5) et une position escamotée, typiquement une position basculée vers l'avant et vers le bas sensiblement verticale (voir figure 7), par exemple contre la paroi limitant vers l'avant le coffre arrière.

La tablette centrale 7 comporte de préférence deux paires de bras, respectivement 20a, 20b; 22a, 22b sur la figure 2. Les bras 20a, 20b sont reliés entre eux par un barreau transversal rigide parallèle à l'axe 9.

Les bras 20a, 22a; 20b, 22b de chaque paire sont montés pivotants sur une pièce d'articulation, respectivement 26, 28 (figure 2).

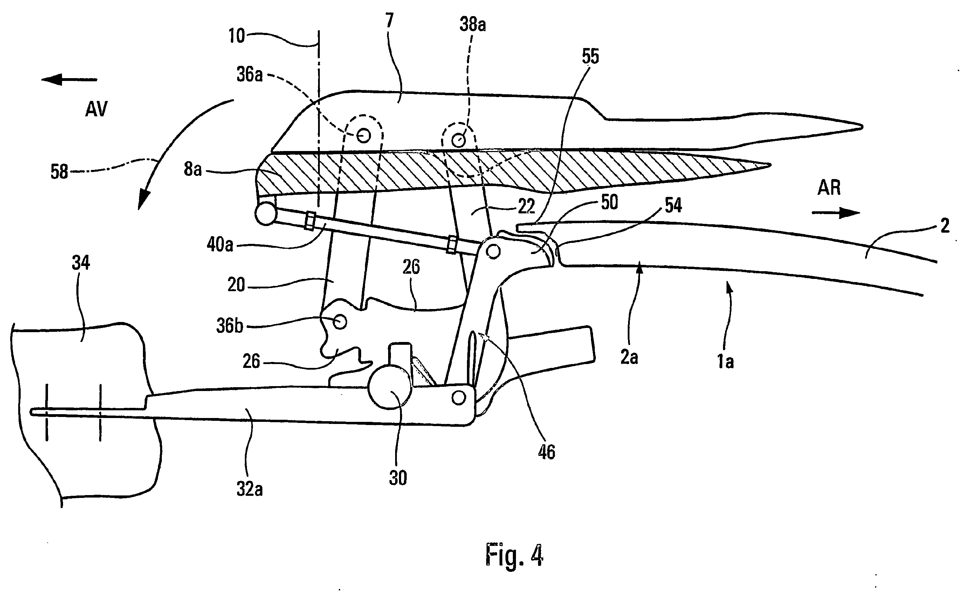

Chaque pièce d'articulation 26, 28 est liée fixement à une tige transversale 30, parallèle à l'axe 9. La tige 30 est fixée au véhicule, typiquement son châssis schématisé en 34 sur les figures 4 et 5, par l'intermédiaire de platines 32a, 32b s'étendant sensiblement parallèlement à l'axe 100 et situées vers les extrémités latérales de la tige 30 (voir figure 2).

Les bras des deux paires 20, 22 sont articulés, à leurs extrémités, suivant des axes parallèles entre eux et à l'axe transversal 9, respectivement par rapport à la tablette 7 et par rapport aux pièces d'articulation 26, 28.

Afin d'assurer le basculement de la tablette centrale, les bras arrière 22a, 22b sont plus longs que les bras avant 20a, 20b et sont arqués pour être plus longs horizontalement que verticalement. En outre, les quatre zones d'articulation concernées (repérées 36a, 36b pour le bras 20a et 38a, 38b pour le deuxième bras d'articulation 22a) sont telles que le point arrière 38b est plus bas que le point avant 36b.

Ainsi, si l'on compare par exemple les figures 4 et 7, on remarque que la tablette 7 (et avec elle les tablettes latérales, dont la tablette 8a) bascule par déformation des parallélogrammes déformables constitués par la tablette 7, la pièce fixe d'articulation concernée, telle que 26, et le groupe de bras 20, 22.

L'escamotage ainsi obtenu de la tablette 7 est typiquement commandé par un système de commande indépendant (non représenté), tel qu'un moteur avec un arbre de sortie en prise sur la tablette.

Les tablettes latérales 8a, 8b sont chacune articulées vers les extrémités latérales de la tablette 7, par l'intermédiaire d'une bielle, 40a pour la tablette 8a, 40b pour la tablette 8b.

L'escamotage des tablettes latérales vis-à-vis de la tablette centrale étant, dans l'exemple considéré, réalisé par rotation autour de l'axe 10 par l'intermédiaire des bielles précitées et étant donc identique pour les deux tablettes, on ne décrira ci-après le mécanisme concerné que pour la tablette 8a.

Ainsi, une extrémité avant de la bielle 40a est reliée, à proximité de la zone 18, à la tablette 8a par une rotule 42. A l'extrémité opposée, la bielle 40a est articulée en rotation, en 44, vis-à-vis d'une butée articulée 46, elle-même montée pivotante en 48 par rapport à la platine 32a.

Les axes d'articulation des zones 44, 48 sont parallèles à l'axe transversal 9 et situés respectivement vers les extrémités opposées de la butée 46 qui présente une forme allongée, à la manière d'un bras, avec, vers l'extrémité de la zone 44, un bec 50 proéminent vers l'arrière.

Un ressort de rappel 52 (figure 2) sollicite naturellement la butée 46 vers l'arrière, et par l'intermédiaire de la bielle 40a, 40b, sollicite également la la tablette latérale 8a, 8b correspondante pour la maintenir dans sa position escamotée par rapport à la tablette centrale, c'est-à-dire dans l'exemple considéré tournée autour de l'axe 10 pour être dissimulée sous la tablette centrale 7 (position des figures 5, 6 et 7).

Compte tenu de cela, on comprend que sur les figures 2, 3 et 4, le déploiement des tablettes latérales par rapport à la tablette centrale 7 a été commandé par le bec 50 de la butée 46 (ou plus exactement de chaque butée, puisqu'on conseille l'utilisation d'un système ainsi conçu pour chaque tablette latérale, comme le montre la figure 2) qui est venu en butée et a été immobilisé par une conformation complémentaire contre l'effet du système de rappel.

Selon l'invention, cette sollicitation des butées mobiles 46 qui commande le déploiement des tablettes latérales est obtenue par contact avec une zone du toit 1a, avantageusement l'extrémité avant (ou zone avant) 2a située à l'avant du toit (voir figure 4).

Cette zone de contact peut donc être à l'avant du toit avant 2, si le repliement du toit (en l'espèce ses parties 2, 3) amène à cette situation.

Sur la figure 4, la proéminence 50 de la butée 46 pénètre dans une cuvette 54 sensiblement en quart de cercle pourvue d'une avancée supérieure 55 et située à l'extrémité avant du toit rangé (ici partie avant 2), par exemple prévue pour recouvrir le joint d'étanchéité transversal prévu le long du bord avant (non représenté) de l'ouverture du toit.

Dans cette position, le toit est ouvert, c'est-à-dire qu'il est replié dans le coffre arrière 4, tandis que la tablette centrale 7 est en position normale d'utilisation (ici position horizontale), la sollicitation des butées 46 à l'encontre du système de rappel assurant le déploiement latéral des tablettes 8a, 8b.

Sur les illustrations, on note également que lorsque le véhicule n'est plus dans cette position cabriolet (toit rangé dans la malle arrière), chaque butée 46 est naturellement sollicitée vers l'arrière par le ressort de rappel 52, de sorte que les tablettes latérales sont escamotées (figures 5, 6 et 7), ce qui libère en particulier un espace permettant de déplacer la tablette centrale entre sa position normale d'utilisation et sa position "escamotée" (position basculée de la figure 7), favorisant ainsi la manoeuvre du toit entre les positions toit ouvert (cabriolet) et toit fermé au dessus de l'habitacle 56 (figure 1).

Pour passer de la position de toit ouvert à celle de toit fermé comme sur la figure 5 (où les tablettes latérales sont donc escamotées), on passe par l'étape intermédiaire de la figure 7 qui montre la tablette centrale dans sa position basculée, étant rappelé que le passage dans cette position de la tablette implique le passage dans la même position basculée par rapport à l'horizontale des tablettes latérales, compte tenu de la liaison qui existe entre elles.

Partant de la position toit ouvert et replié de la figure 4, un moyen de commande (non représenté) entraîne la tablette 7 vers l'avant, ce qui provoque donc son basculement par articulation autour des bras 20, 22, dans le sens de la flèche 58.

Dès le début du pivotement de la tablette centrale 7, les moyens de buteé 46 sollicités vers l'arrière par le ressort 52 restent immobiles par rapport au châssis du véhicule, le bec 50 pressé contre le toit replié.

Chacune des bielles 40a, 40b, immobilisée par le moyen de butée 46 correspondant, retient la rotule 42 correspondante, ce qui provoque le pivotement de la tablette latérale 8a, 8b vers sa position escamotée par rapport à la tablette centrale lorsque celle-ci pivote.

Lorsque chaque tablette latérale 8a, 8b a atteint sa position escamotée, la rotule 42 tire la bielle 40a, 40b, et donc le moyen de butée 46 correspondant vers l'avant contre l'effet du ressort de rappel 52 jusqu'à la fin du mouvement de pivotement vers l'avant de la tablette centrale 7 lorsque celle-ci a atteint sa position basculée (figure 7).

Avantageusement, pour faciliter le passage du toit, les moyens de butée 46 s'étendent sensiblement verticalement dans la position rangée/basculée de la tablette 7, malgré la sollicitation vers l'arrière qu'exerce le ressort 52 de rappel (voir figure 7).

Les tablettes étant dans leur position escamotée de la figure 7, le passage du toit au-dessus d'elles et le dépliement de ce toit jusqu'à sa position fermée au dessus de l'habitacle permet le retour de la tablette centrale en position normale d'utilisation comme sur la figure 5.

Les moyens de commande concernés (hydrauliques, électriques ...) assurent alors le basculement en retour, via les bras 20, 22, de la tablette 7 dans le sens de la flèche 60 de la figure 5, jusqu'à ce que les tablettes reviennent dans leur position horizontale. Dans ce mode de réalisation, les tablettes latérales demeurent escamotées, repliées sous la tablette centrale lorsque le toit n'exerce pas de pression sur les butées.

En comparant les figures 4 et 5, on notera aussi que la tablette centrale 7 est, en position normale d'utilisation, plus avancée en direction de l'avant du véhicule dans la position fermée du toit (figure 5) qu'elle ne l'est dans la position rangée et repliée de ce toit (figure 4).

Comme schématisé aux figures 5 et 6, dans la position fermée du toit, les tablettes latérales 8a, 8b sont dans leur position escamotée sous la tablette centrale 7 puisque le bec 50 de la butée 46 n'a rencontré aucun obstacle lors du pivotement de la tablette centrale 7 de sa positon escamotée vers sa position normale d'utilisation correspondant à la position fermée du toit.

Cette position plus avancée vers l'avant de la tablette centrale 7 est rendue nécessaire par le fait que, comme schématisé à la figure 6, le bord arrière 7a de la tablette centrale 7 doit être arrêté sensiblement devant la surface avant 300 du bord inférieur arrière 301 de la partie de toit arrière 3 dans la position déployée du toit 2, 3 au-dessus de l'habitacle 56 (voir figure 1).

Dans la position rangée et repliée du toit dans le coffre arrière du véhicule, la tablette centrale 7 peut être dans sa position arrière de la figure 4 en obturant l'ouverture libérée par le bord inférieur arrière 301 également rangé dans le coffre arrière.

On notera encore qu'en variante d'autres systèmes de rappel que le ressort de torsion 52 pourraient être utilisés pour solliciter et maintenir chaque butée 46 vers l'arrière, en l'absence de contact avec la zone concernée du toit. On pourrait ainsi prévoir un vérin hydraulique ou un bras couplé à un moteur électrique agissant sur la butée concernée.

On a décrit ci-dessus des tablettes latérales 8a, 8b, pivotantes par rapport à la tablette centrale 7. On pourrait également prévoir des tablettes latérales montées de manière coulissante dans une direction transversale du véhicule. Il suffirait alors de prévoir un dispositif connu quelconque permettant de transformer un déplacement relatif longitudinal de la bielle 40a, 40b, en un déplacement relatif transversal de la tablette latérale correspondante 8a, 8b.

## Revendications

1. Système de plage arrière escamotable à disposer sur un véhicule découvrable à toit rigide (1a) repliable dans un espace de rangement (4) du véhicule, lequel véhicule présente un axe longitudinal (100) et un avant (AV) et comprend un châssis (34) et un habitacle (56), le système comprenant une tablette centrale (7) et deux tablettes latérales (8a, 8b) disposées de part et d'autre de la tablette centrale, solidaires de celle-ci et mobiles par rapport à celle-ci, ainsi que des moyens (20,22) pour faire pivoter la tablette centrale autour d'au moins un axe transversal par rapport audit axe longitudinal, entre une position normale d'utilisation et une position escamotée vers l'avant à l'intérieur de l'espace de rangement, permettant ainsi de ranger le toit repliable à l'intérieur de l'espace de rangement ou à l'inverse de sortir ce toit de sa position rangée vers une position fermée au dessus de l'habitacle, et des moyens (40a, 46) pour déplacer les tablettes latérales par rapport à la tablette centrale, **caractérisé en ce qu'**il comprend des moyens de butée solidaires de la tablette centrale (7) et mobiles avec celle-ci ou par rapport à celle-ci vers l'avant ou vers l'arrière du véhicule, ces moyens étant agencés de manière telle que, lorsque la tablette centrale (7) pivote vers l'arrière pour passer de sa position escamotée à sa position normale d'utilisation alors que le toit (1a) est dans sa position rangée, ces moyens de butée sont adaptés à venir en butée contre une conformation complémentaire du toit en position rangée pour commander le déploiement des tablettes latérales (8a, 8b) par rapport à la tablette centrale (7).

2. Système de plage arrière selon la revendication 1, **caractérisé en ce que** les moyens de butée (46) sont sollicités en permanence vers l'arrière par des moyens de rappel élastique (52).

3. Système de plage arrière selon la revendication 1 ou 2, **caractérisé en ce que** les moyens de butée (46) sont ménagés à l'extrémité libre d'au moins un bras (22, 22a, 22b) monté de manière pivotante autour d'un axe transversal par rapport à la carrosserie du véhicule.

4. Système de plage arrière selon l'une quelconque des revendications précédentes, **caractérisé en ce que** les moyens de butée (46) sont reliés par une bielle (40a, 40b) à des moyens d'actionnement (42) de la tablette latérale correspondante (8a, 8b).

5. Système de plage arrière selon la revendication 4, chaque tablette latérale (8a, 8b) étant montée de manière pivotante autour d'un axe (10) correspondant sensiblement perpendiculaire à la surface supérieure (11) de la tablette centrale (7), **caractérisé en ce que** chaque bielle (40a, 40b) est reliée à la tablette latérale (8a, 8b) correspondante par une rotule (42) disposée par rapport audit axe perpendiculaire correspondant (10) d'une manière telle qu'un déplacement relatif vers l'avant de chaque bielle (40a, 40b) par rapport à la tablette centrale (7) provoque un pivotement de la tablette latérale (8a, 8b) correspondante vers sa position déployée.

6. Système de plage arrière escamotable selon l'une quelconque des revendications précédentes, **caractérisé en ce que :**
- les moyens de butée mobile (46) sont liés à une barre (30) s'étendant transversalement par rapport à l'axe longitudinal (100) du véhicule et fixe par rapport au châssis (34) du véhicule,
- et la tablette centrale (7) est montée pivotante par rapport à cette barre (30), par l'intermédiaire d'au moins une paire de bras articulés (20, 22).

7. Système plage arrière escamotable selon les revendications 5 et 6, **caractérisé en ce que** :
- en position escamotée de la tablette centrale (7), celle-ci et les tablettes latérales (8a, 8b) sont basculées en position sensiblement verticale,
- et, lors de ce basculement, la bielle (40a) agit sur le bras articulé (20, 22) concerné pour le placer en position sensiblement horizontale, pour le passage du toit.

8. Système de plage arrière escamotable selon la revendication 2 ou l'une quelconque des revendications qui en dépendent, **caractérisé en ce qu'**en position normale d'utilisation, alors que le toit (1a) est fermé au-dessus de l'habitacle du véhicule, les moyens de butée (46) sont sollicités vers l'arrière sous l'effet des moyens de rappel (52) et maintiennent ainsi les tablettes latérales (8a, 8b) escamotées par rapport à la tablette centrale (7).

9. Système de plage arrière escamotable selon l'une quelconque des revendications précédentes, **caractérisé en ce que** la tablette centrale (7) est, en position normale d'utilisation, plus avancée en direction de l'avant du véhicule dans la position fermée du toit (1a) qu'elle ne l'est dans la position rangée de ce toit.

10. Véhicule découvrable à toit rigide repliable, **caractérisé en ce qu'**il comporte un système de plage arrière escamotable selon l'une quelconque des revendications précédentes.

## Claims

1. Retractable parcel shelf system to be disposed on a convertible vehicle with a rigid roof (1a) that is foldable into a storage space (4) in the vehicle, this vehicle having a longitudinal axis (100) and a front section (AV) and comprising a chassis (34) and a passenger compartment (56), the system comprising a central panel (7) and two lateral panels (8a, 8b) located on either side of the central panel, fixed to the latter and movable in relation to the latter, as well as means (20, 22) for pivoting the central panel about at least one transversal axis in relation to said longitudinal axis, between a normal operating position and a forwards retracted position inside the storage space, thus allowing to store the foldable roof in the storage space or inversely to extract this roof from its stored position into a closed position above the passenger compartment, and means (40a, 46) for moving the lateral panels in relation to the central panel, **characterised in that** it comprises stop means fixed to the central panel (7) and movable with the same or in relation to the same towards the front or the rear of the vehicle, these means being embodied such that when the central panel (7) pivots to the rear to move from its retracted position to its normal operating position when the roof (1a) is in its stored position, these stop means are adapted to abut a complementary formation on the roof in its stored position in order to control the deployment of the lateral panels (8a, 8b) in relation to the central panel (7).

2. Parcel shelf system according to claim 1, **characterised in that** the stop means (46) are permanently urged towards the rear by elastic return means (52).

3. Parcel shelf system according to claim 1 or 2, **characterised in that** the stop means (46) are laid out at the free end of at least one arm (22, 22a, 22b) pivotably mounted about a transversal axis in relation to the body of the vehicle.

4. Parcel shelf system according to any one of the previous claims, **characterised in that** the stop means (46) are linked via a connecting rod (40a, 40b) to means (42) for actuating the corresponding lateral panel (8a, 8b).

5. Parcel shelf system according to claim 4, each lateral panel (8a, 8b) being pivotably mounted about a corresponding axis (10) substantially perpendicular to the upper surface (11) of the central panel (7), **characterised in that** each connecting rod (40a, 40b) is linked to the corresponding lateral panel (8a, 8b) via a spherical joint (42) located in relation to said corresponding perpendicular axis (10) so that a relative forward displacement of each connecting rod (40a, 40b) in relation to the central panel (7) pivots the corresponding lateral panel (8a, 8b) towards its deployed position.

6. Retractable parcel shelf system according to any one of the previous claims, **characterised in that:**
- the movable stop means (46) are linked to a bar (30) extending transversally in relation to the longitudinal axis (100) of the vehicle and fixed in relation to the chassis (34) of the vehicle;
- and the central panel (7) is mounted so as to pivot in relation to said bar (30), by means of at least a pair of articulated arms (20, 22).

7. Retractable parcel shelf system according to claims 5 and 6, **characterised in that:**
- in the retracted position of the central panel (7), the latter and the lateral panels (8a, 8b) are tilted in a substantially vertical position;
- and, during this tilting, the connecting rod (40a) acts on the concerned articulated arm (20, 22) in order to put it into a substantially horizontal position, so that the roof can pass by.

8. Retractable parcel shelf system according to claim 2 or any one of the claims dependent thereof, **characterised in that** in the normal operating position, when the roof (1a) is closed above the passenger compartment of the vehicle, the concerned stop means(46) are urged towards the rear by means of the return means (52) and thus retain the lateral panels (8a, 8b) in a retracted position in relation to the central panel (7).

9. Retractable parcel shelf system according to any of the previous claims, **characterised in that** the central panel (7) is, in the normal operating position, further forward in the direction of the vehicle in the closed position of the roof (1a) than it is in the stored position of this roof.

10. Convertible vehicle with a rigid folding roof, **characterised in that** it comprises a retractable parcel shelf system according to any one of the previous claims.

## Patentansprüche

1. System einer versenkbaren hinteren Ablage um auf ein Cabriolet-Fahrzeug mit starrem Dach (1a) angeordnet zu sein, das in einen Stauraum (4) des Fahrzeugs faltbar ist, wobei das Fahrzeug eine Längsachse (100) und eine Vorderseite (AV) aufweist und ein Fahrgestell (34) und einen Innenraum (56) umfaßt, wobei das System eine zentrale Platte (7) und zwei seitliche Platten (8a, 8b) aufweist, die auf der einen und der anderen Seite der zentralen Platte angeordnet sind, fest mit dieser verbunden und beweglich in Bezug auf diese, sowie Mittel (20, 22), um die mittlere Platte um zumindest eine Achse, die in Bezug auf die genannte Längsachse quer verläuft, schwenken zu lassen, zwischen einer normalen Gebrauchsposition und einer nach vom ins Innere des Stauraums versenkten Position, so daß **dadurch** die Möglichkeit besteht, das faltbare Dach ins Innere des Stauraums zu verstauen oder umgekehrt das Dach aus seiner verstauten Position in eine geschlossene Position oberhalb des Innenraums herauszubewegen, und Mittel (40a, 46) zum Verlagern der seitlichen Platten in Bezug auf die mittlere Platte, **dadurch gekennzeichnet, daß** es Anschlagmittel aufweist, die fest mit der mittleren Platte (7) und mit dieser oder in Bezug auf diese zur Vorderseite oder zur Rückseite des Fahrzeugs bewegbar sind, wobei diese Mittel so eingerichtet sind, daß dann, wenn die mittlere Platte (7) nach hinten schwenkt, um aus ihrer versenkten Position in ihre normale Gebrauchsposition überzugehen, wenn sich das Dach (1a) in seiner verstauten Position befindet, diese Anschlagmittel angepaßt sind, um gegen eine komplementäre Ausformung des Dachs in verstauter Position anzuschlagen, um die Herausverlagerung der seitlichen Platten (8a, 8b) in Bezug auf die mittlere Platte (7) anzusteuern.

2. System einer hinteren Ablage nach Anspruch 1, **dadurch gekennzeichnet, daß** die Anschlagmittel (46) durch elastische Rückstellmittel (52) permanent nach hinten vorgespannt sind.

3. System einer hinteren Ablage nach Anspruch 1 oder 2, **dadurch gekennzeichnet, daß** die Anschlagmittel (46) am freien Endabschnitt von zumindest einem Arm (22, 22a, 22b) angeordnet sind, der schwenkbar um eine in Bezug auf die Karosserie des Fahrzeugs quer verlaufende Achse angebracht ist.

4. System einer hinteren Ablage nach einem der vorangehenden Ansprüche, **dadurch gekennzeichnet, daß** die Anschlagmittel (46) durch eine Gelenkstange (40a, 40b) mit Betätigungsmitteln (42) der entsprechenden seitlichen Platte (8a, 8b) verbunden sind.

5. System einer hinteren Ablage nach Anspruch 4, wobei jede seitliche Platte (8a, 8b) schwenkbar um eine korrespondierende Achse (10), die im wesentlichen senkrecht zu der Oberseite (11) der zentralen Platte (7) ist, gehalten ist, **dadurch gekennzeichnet, daß** jede Gelenkstange (40a, 40b) mit der entsprechenden seitlichen Platte (8a, 8b) durch ein Kugelgelenk (42) verbunden ist, das in Bezug auf die genannte korrespondierende senkrechte Achse (10) auf eine solche Weise angeordnet ist, daß eine relative Verlagerung einer jeder Gelenkstange (40a, 40b) in Bezug auf die mittlere Platte (7) nach vom ein Verschwenken der entsprechenden seitlichen Platte (8a, 8b) in Richtung auf ihre herausverlagerte Position bewirkt.

6. System einer versenkbaren hinteren Ablage nach einem der vorangehenden Ansprüche, **dadurch gekennzeichnet, daß**:
- die bewegliche Anschlagmittel (46) mit einer Stange (30) verbunden sind, die sich quer in Bezug auf die Längsachse (100) des Fahrzeugs erstreckt und in Bezug auf das Fahrgestell (34) des Fahrzeugs ortsfest ist,
- und daß die zentrale Platte (7) schwenkbar in Bezug auf diese Stange (30) angebracht ist, unter Zwischenschaltung von zumindest einem Paar von Gelenkarmen (20, 22).

7. System einer versenkbaren hinteren Ablage nach den Ansprüchen 5 und 6, **dadurch gekennzeichnet, daß**:
- in der versenkten Position der mittleren Platte (7) diese und die seitlichen Platten (8a, 8b) in eine im wesentlichen vertikale Position geschwenkt sind,
- und, bei diesem Verschwenken, die Gelenkstange (40a) auf den betroffenen Gelenkarm (20, 22) einwirkt, um diesen in eine im wesentlichen horizontale Position zu bringen, für den Durchgang des Dachs.

8. System einer versenkbaren hinteren Ablage nach Anspruch 2 oder nach einem der auf diesen rückbezogenen Ansprüche, **dadurch gekennzeichnet, daß** in einer normalen Gebrauchsposition, wenn das Dach (1a) über dem Innenraum des Fahrzeugs geschlossen ist, die betroffene Anschlagmittel (46) unter der Wirkung der Rückstellmittel (52) nach hinten gedrückt werden und auf diese Weise die seitlichen Platten (8a, 8b) in Bezug auf die mittlere Platte (7) versenkt halten.

9. System einer versenkbaren hinteren Ablage nach einem der vorangehenden Ansprüche, **dadurch gekennzeichnet, daß** die mittlere Platte (7) in einer normalen Gebrauchsposition sich weiter vom in Fahrtrichtung des Fahrzeugs befindet, in der geschlossenen Position des Dachs (1a), als sie sich in der verstauten Position des Dachs befindet.

10. Cabriolet-Fahrzeug mit einem starren, faltbaren Dach, **dadurch gekennzeichnet, daß** es ein System einer versenkbaren hinteren Ablage nach einem der vorangehenden Ansprüche umfaßt.
